# EUROPÄISCHE PATENTSCHRIFT

(11) **EP 2 218 316 B1**
(45) Veröffentlichungstag und Bekanntmachung des Hinweises auf die Patenterteilung: **21.09.2011**
(21) Anmeldenummer: 09001872.2
(22) Anmeldetag: 11.02.2009
(51) Int. Cl.: A01B 33/02, A01B 33/08

(54) **Motorhacke mit schaltbarer Kupplung**
Power hoe with switchable clutch
Motobineuse dotée d'un embrayage commutable

(43) Veröffentlichungstag der Anmeldung: 18.08.2010
(73) Patentinhaber: Viking GmbH, 6336 Langkampfen (AT)
(72) Erfinder: Hager, Georg, 6322 Kirchbichl (AT)
(74) Vertreter: Wasmuth, Rolf

(56) Entgegenhaltungen:
- DE-U1-202004 016 761
- FR-A- 2 757 595
- US-A- 2 903 077

## Beschreibung

Die Erfindung betrifft eine Motorhacke zur Bearbeitung eines Bodens mit einer zur Bodenfläche des Bodens etwa horizontal liegenden Antriebswelle nach dem Oberbegriff des Anspruchs 1.

Aus der DE 20 2004 016 761 U1 ist eine Motorhacke zur Bearbeitung eines Bodens bekannt, bei der eine zur Bodenfläche etwa horizontal liegende Arbeitswelle mindestens ein Hackwerkzeug trägt. Die Motorhacke besitzt einen Rahmen, auf dem ein Antriebsmotor befestigt ist, dessen Antriebswelle über eine schaltbare Kupplung mit einer Abtriebswelle verbindbar ist, deren anderes Ende die Arbeitswelle antreibt. Die schaltbare Kupplung besteht aus einem Riementrieb, wobei ein Riemen mit einer Riemenseite über eine antreibende Riemenscheibe der Antriebswelle mit der gleichen Riemenseite über eine abtreibende Riemenscheibe der Abtriebswelle läuft. Es ist eine Spannvorrichtung zum kraftübertragenden Anlegen des Riemens an die Riemenscheiben vorgesehen. Die Riemenscheiben sind für zwei über diese laufenden Riemen ausgebildet, wobei die Antriebswelle eine zweite Riemenscheibe trägt, die mit einem zweiten Antriebsriemen eines weiteren Riementriebs zusammenwirkt. Dabei weist der zweite Antriebsriemen eine endlose innere Riemenseite und eine endlose äußere Riemenseite auf, wobei der zweite Antriebsriemen über eine zweite abtreibende Riemenscheibe sowie eine dritte umlenkende Riemenscheibe läuft. Der zweite Antriebsriemen läuft mit einer ersten Riemenscheibe auf den ersten zugeordneten Riemenscheiben und mit der zweiten Riemenscheibe über die zweite zugeordnete Riemenscheibe derart, dass der erste Riementrieb einen Antrieb der Arbeitswelle in eine erste Drehrichtung und der zweite Riementrieb einen Antrieb der Arbeitswelle entgegen der ersten Drehrichtung bewirkt.

Eine weitere Motorhacke ist aus der DE 1 008 948 B bekannt. Auf einem Rahmen der Motorhacke ist ein Antriebsmotor befestigt, dessen Antriebswelle etwa vertikal steht und über eine Fliehkraftkupplung eine Abtriebswelle antreibt, die über ein Schneckenradgetriebe die horizontal zur Bodenfläche liegende Arbeitswelle mit Arbeitswerkzeugen antreibt. Aus der US 3,744,569 ist eine Motorhacke gemäß dem Oberbegriff des Anspruchs 1 bekannt, bei der die Antriebswelle des Verbrennungsmotors eine Riemenscheibe trägt. Die Abtriebswelle mit dem Schneckenradgetriebe weist ebenfalls eine Riemenscheibe auf, wobei über beide Riemenscheiben ein Antriebsriemen läuft. Der Keilriemen liegt schlaff auf den Riemenscheiben auf, so dass in einer ersten, ausgekuppelten Stellung keine Kraft übertragen wird. In einer zweiten, eingekuppelten Stellung drückt eine Spannrolle gegen die Riemenaußenseite, wodurch der Riemen gespannt und kraftübertragend in die Riemenscheiben gedrückt wird. Der Antriebsmotor treibt über den Antriebsriemen das Schneckenradgetriebe und damit die Arbeitswelle mit den Hacksternen oder anderem Werkzeug oder anderen Werkzeugen an.

Bei Arbeit mit einer Motorhacke muss die Bedienungsperson das Gerät sowohl in die Drehrichtung als auch gegen die Drehrichtung der Arbeitswelle bewegen. Während dies bei einer Schubbewegung in Drehrichtung mit wenig Kraftaufwand möglich ist, ist eine Bewegung der Motorhacke entgegen Drehrichtung der Arbeitswelle sehr kraftaufwendig.

Der Erfindung liegt die Aufgabe zugrunde, eine Motorhacke der gattungsgemäßen Art derart auszubilden, dass in jeder Betriebsweise ein minimaler Kraftaufwand zum Bewegen der Motorhacke ausreichend ist.

Die Aufgabe wird erfindungsgemäß durch eine Motorhacke mit den Merkmalen des Anspruchs 1 gelöst.

Durch die Anordnung eines zweiten Riementriebs parallel zum ersten antreibenden Riementrieb besteht die Möglichkeit, jedem Riementrieb eine eigene Drehrichtung aufzuprägen. Während bei dem ersten Riementrieb die antreibende Riemenscheibe und die abtreibende Riemenscheibe innerhalb des Riemens liegen, ist bei dem erfindungsgemäßen zweiten Riementrieb vorgesehen, dass eine der Antriebsscheiben außerhalb des Riementriebs liegt. Somit wirkt der Antriebsriemen z. B. auf der Abtriebsscheibe mit seiner Innenseite zusammen, während der Antriebsriemen mit der antreibenden Riemenscheibe der Antriebswelle mit seiner Riemenaußenseite zusammenwirkt. Damit ergibt sich eine Drehrichtungsumkehr, wodurch für den Benutzer die Möglichkeit gegeben ist, durch Einkuppeln des ersten Riementriebs die Arbeitswelle mit den Hacksternen oder anderem Werkzeug in einer ersten Drehrichtung zu bewegen, während - nach Auskuppeln des ersten Riementriebs - durch Einkuppeln des zweiten Riementriebs die Antriebswelle mit den Hacksternen oder anderem Werkzeug in eine Gegendrehrichtung angetrieben wird. Je nach Arbeitsrichtung der Motorhacke kann der Benutzer die für ihn zweckmäßige Drehrichtung der Arbeitswelle wählen, so dass es immer möglich ist, beim Arbeiten mit der Motorhacke den Kraftaufwand zu reduzieren. Gemäß der Erfindung ist die dritte, umlenkende Riemenscheibe des zweiten Riementriebes über eine exzentrische Nabe an der gehäusefesten Lagerachse gehalten, wobei die Riemenscheibe selbst auf der Nabe drehbar ist.

In Weiterbildung der Erfindung liegen sich die dritte, umlenkende Riemenscheibe des zweiten Riementriebes sowie die zweite abtreibende Riemenscheibe des zweiten Riementriebes bezogen auf die Drehachse der Antriebswelle des Antriebsmotors einander etwa diametral gegenüber. Dabei kann es zweckmäßig sein, dass die Lagerachsen der Riemenscheiben im Wesentlichen gehäusefest sind und etwa auf einer gemeinsamen Geraden liegen.

Zum Einkuppeln des zweiten Riementriebes wird die dritte, umlenkende Riemenscheibe exzentrisch um das gehäusefeste Lager von einer ausgekuppelten Stellung des Riementriebs in eine eingekuppelte Stellung des Riementriebs verschwenkt.

Es kann vorteilhaft sein, als Antriebsriemen mehrrillige Keilriemen zu verwenden, durch die eine höhere Kraftübertragung bei gleichem Umschlingungswinkel möglich ist. Die entsprechenden Riemenscheiben können mehrteilig, z. B. zweiteilig ausgeführt sein. Vorteilhaft sind einteilige Riemenscheiben vorgesehen.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in perspektivischer Darstellung eine erfindungsgemäße Motorhacke,
- Fig. 2: eine Teildarstellung des geöffneten Antriebs der Motorhacke nach Fig. 1,
- Fig. 3: eine Draufsicht auf die Teildarstellung nach Fig. 2 mit entkuppelten Riementrieben,
- Fig. 4: eine Draufsicht auf die Riementriebe nach Fig. 3 mit eingekuppeltem ersten Riementrieb und ausgekuppeltem zweiten Riementrieb,
- Fig. 5: eine Draufsicht auf die Riementriebe nach Fig. 3 mit ausgekuppeltem ersten Riementrieb und eingekuppeltem zweiten Riementrieb.

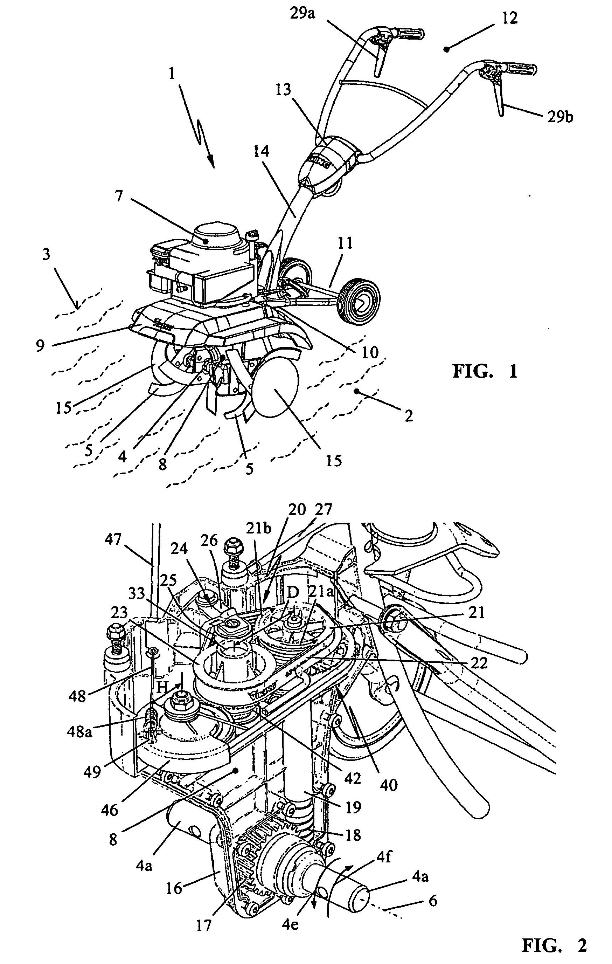

Die in Fig. 1 dargestellte Motorhacke 1 dient zur Bearbeitung eines Bodens 2, zu dessen Bodenfläche 3 eine Arbeitswelle 4 etwa horizontal liegt. Die Arbeitswelle 4 trägt im Ausführungsbeispiel mehrere Arbeitswerkzeuge 5 in Form von Hacksternen oder anderem Werkzeug, die sich zusammen mit der Arbeitswelle 4 um die horizontal liegende Drehachse 6 drehen.

Zum Antrieb der Arbeitswelle ist ein Antriebsmotor 7 vorgesehen, der im gezeigten Ausführungsbeispiel ein Verbrennungsmotor ist. Ein derartiger Verbrennungsmotor kann sowohl ein Zweitaktmotor, ein Zweitaktmotor mit Spülvorlage oder auch ein Viertaktmotor sein.

Der Antriebsmotor 7 ist an dem einen Ende eines Getriebegehäuses 8 vorgesehen, dessen anderes Ende dem Boden 2 zugewandt liegt und die Arbeitswelle 4 trägt. Zwischen dem Antriebsmotor 7 und dem Getriebegehäuse 8 ist eine Schutzhaube 9 vorgesehen, die zumindest einen Teil der Arbeitsbreite der Arbeitswelle 4 abdeckt und sich von einer vorderen Stirnseite der Motorhacke bis zu einem rückwärtigen Ende der Motorhacke erstreckt.

Der Rahmen 10 der Motorhacke 1 trägt die Anordnung aus Verbrennungsmotor 7, Getriebegehäuse 8 und Arbeitswelle 4 mit den Arbeitswerkzeugen 5, wobei am Rahmen 10 ferner Stützräder 11 angeordnet sind, die sowohl beim Transport der Motorhacke von einem Einsatzort zum nächsten dienen, als auch im Einsatzfall zur Abstützung der Motorhacke genutzt werden können. Geführt wird die Motorhacke 1 durch einen Lenkergriff 12, der in einem Lenkerkopf 13 bevorzugt verstellbar gehalten ist. Der Lenkerkopf 13 ist über ein Stützrohr 14 mit dem Rahmen 10 verbunden.

Zur Begrenzung des Arbeitsfeldes der Motorhacke 1 können auf den Enden der Arbeitswelle 4 Abschlussscheiben 15 montiert sein. Die Abschlussscheiben dienen dem Pflanzenschutz und auch der seitlichen Führung der Motorhacke 1.

In Fig. 2 ist das geöffnete Getriebegehäuse der erfindungsgemäßen Motorhacke 1 perspektivisch dargestellt. Die Antriebsstummel 4a der Arbeitswelle 4 sind in einem unteren Lager 16 des Getriebegehäuses gehalten, wobei die beiden Antriebsstummel 4a einteilig ausgeführt sein können. Zwischen den Antriebsstummeln 4a bzw. drehfest auf ihrem Mittelabschnitt festgelegt ist ein Zahnrad 17, welches mit einem Schneckenrad 18, oder Ähnlichem, kämmt.

Das Schneckenrad 18 oder Ähnliches ist am unteren Ende einer Abtriebswelle 19 vorgesehen, deren anderes Ende eine Riemenscheibe 21 eines ersten Riementriebes 20 trägt. Dieser erste Riementrieb weist einen - vorzugsweise mehrrilligen - Antriebsriemen 22 auf, der über eine erste antreibende Riemenscheibe 23 läuft. Der Abstand D zwischen der abtreibenden Riemenscheibe 21 und der antreibenden Riemenscheibe 23 ist derart bemessen, dass der Antriebsriemen 22 nur schlaff aufliegt, so dass keine Kraftübertragung möglich ist.

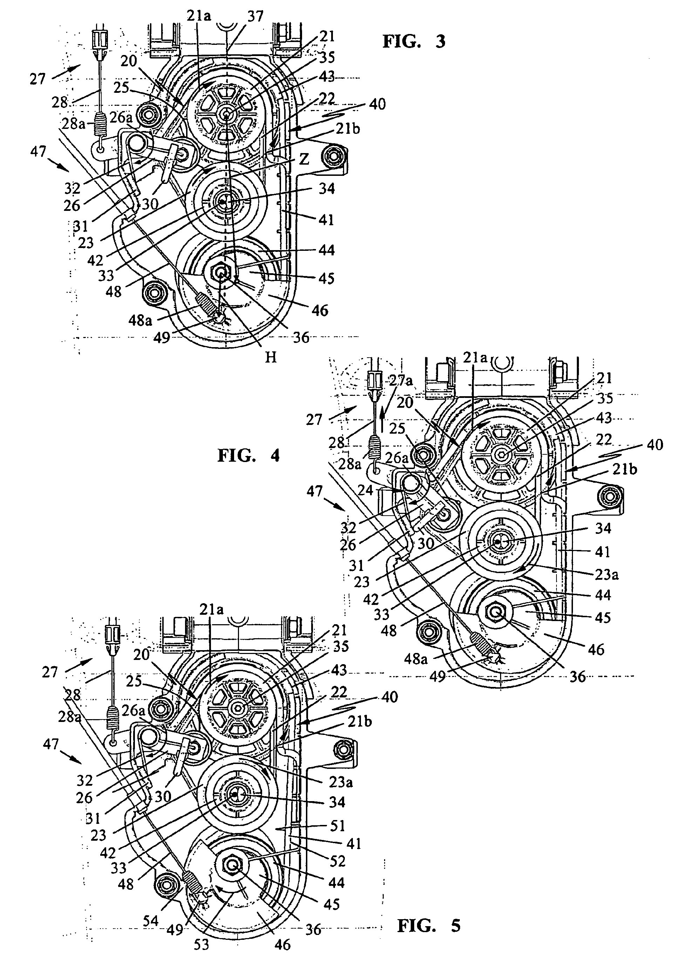

Um den ersten Riementrieb 20 einzukuppeln ist eine Spannvorrichtung 24 vorgesehen, deren Spannrolle 25 innerhalb des Antriebsriemens 22 liegt. Wie auch die Figuren 3 bis 5 zeigen, ist die Spannrolle 25 am Ende eines Schwenkhebels 26 angeordnet, der über eine Stellvorrichtung 27 zu verstellen ist. Eine derartige Stellvorrichtung ist vorzugsweise ein Bowdenzug 28, der über einen Stellhebel 29 im Griffbereich des Lenkers 12 zu betätigen ist. Zwischen der Bowdenzugseele und dem Verschwenkhebel 26 ist zweckmäßig eine Zugfeder 28a angeordnet.

In Fig. 4 ist die eingekuppelte Stellung des ersten Riementriebs 20 dargestellt. Die Bowdenzugseele ist in Pfeilrichtung 27a zurückgezogen, wodurch der Schwenkhebel 26 in Pfeilrichtung 26a ausschwenkt und dadurch den Antriebsriemen 22 in die Rillen der Riemenscheiben 21 und 23 zieht. Über die Flanken des Keilriemens kann so eine Kraftübertragung erfolgen, so dass die in Pfeilrichtung 23a rotierende antreibende Riemenscheibe 23 den Riemen kraftübertragend mitnimmt und die erste, abtreibende Riemenscheibe 21 in Pfeilrichtung 21a dreht. Dadurch dreht die Abtriebswelle 19, so dass das am unteren Ende angeordnete Schneckenrad 18 oder Ähnliches mit dem Zahnrad 17 kämmt und die Abtriebswelle 4 in Drehrichtung 4e antreibt.

Um die im eingekuppelten Zustand auftretende Riemenspannung des Antriebsriemens 22 des ersten Riementriebs 20 zu begrenzen, ist ein Anschlag 30 vorgesehen, der mit einem entsprechenden Gegenanschlag 31 zusammenwirkt und den Verschwenkweg des Hebels 26 in Pfeilrichtung 26a begrenzt. Über eine Schenkelfeder 32 ist der Verschwenkhebel 26 in seiner Ruhelage kraftbeaufschlagt, wobei die Ruhelage des Verschwenkhebels 26 und damit der Spannrolle 25 dem ausgekuppelten Zustand des ersten Riementriebs 20 entspricht.

Erfindungsgemäß ist im Getriebegehäuse ein zweiter Riementrieb 40 mit einem zweiten Antriebsriemen 41 vorgesehen, der ebenfalls mit einer auf der Antriebswelle 33 vorgesehenen zweiten, antreibenden Riemenscheibe 42 kuppelbar ist.

Dem zweiten Riementrieb 40 ist eine zweite, abtreibende Riemenscheibe 43 zugeordnet. Wie in der Draufsicht nach den Figuren 3 bis 5 zu sehen, liegen sich die zweite, abtreibende Riemenscheibe 43 und eine dritte, umlenkende Riemenscheibe 44 bezogen auf die Drehachse 34 der Antriebswelle 33 etwa diametral gegenüber. Wie aus der Draufsicht zu ersehen, liegt somit die zweite, antreibende Riemenscheibe 42 zwischen der umlenkenden Riemenscheibe 44 und der zweiten, abtreibenden Riemenscheibe 43. Die Lagerachsen 34, 35 und 36 liegen gehäusefest etwa auf einer gemeinsamen Geraden 37.

Die umlenkende Riemenscheibe 44 ist mit einer exzentrischen Nabe 45 an der gehäusefesten Lagerachse 36 der umlenkenden Riemenscheibe 44 gehalten, wobei die Riemenscheibe 44 selbst drehbar auf der Nabe 45 liegt. Wird die Nabe 45 um die gehäusefeste Lagerachse 36 verschwenkt, ändert sich der Abstand Z zwischen der abtreibenden Riemenscheibe 43 und der umlenkenden Riemenscheibe 44. Somit kann durch Verschwenken der umlenkenden Riemenscheibe 44 der zweite Riementrieb 40 eingekuppelt oder ausgekuppelt werden.

Zur Bewegung der umlenkenden Riemenscheibe 44 ist eine Stellvorrichtung 47 vorgesehen, die an einer Haube 46 angreift, welche an der Nabe 45 fixiert ist. Die Nabe 45 und die Haube 46 bilden somit ein gemeinsam verstellbares Bauteil. Die Haube 46 dient als Schutzhaube und/oder zur Führung des Riemens und erstreckt sich über etwa 180° Umfangswinkel der umlenkenden Riemenscheibe 44. Die Stellvorrichtung 47 ist in Form eines Bowdenzuges 48 gestaltet, dessen Bowdenzugseele über eine Zugfeder 48a, im Ausführungsbeispiel eine Schraubenfeder, an der Haube 46 angreift. Der Abstand H zwischen dem Anlenkpunkt 49 und der Lagerachse 36 bildet die wirksame Länge eines Hebels.

Der zweite Antriebsriemen 41 weist, wie jeder Riemen an sich, eine endlose, innere Riemenseite 51 sowie eine endlose, äußere Riemenseite 52 auf. Der zweite Antriebsriemen 41 ist so auf die ihm zugeordneten Riemenscheiben 43 und 44 aufgelegt, dass die endlose, innere Riemenseite 51 die umlenkende Riemenscheibe 44 ebenso umschlingt wie die zweite, abtreibende Riemenscheibe 43. Die zweite, antreibende Riemenscheibe 42 liegt außerhalb des Riemens 41, so dass der zweite Antriebsriemen 41 mit seiner endlosen, äußeren Riemenseite 52 die zweite, antreibende Riemenscheibe 42 umschlingt. Durch diese Art von Riemenführung ergibt sich eine andere Drehrichtung der Abtriebswelle 19.

Dreht sich die Antriebswelle 33 - wie in Fig. 4 gezeigt - weiterhin in Antriebsdrehrichtung 23a, so wird der eingekuppelte zweite Antriebsriemen 41 in Drehrichtung 23a mitgenommen, wodurch die zweite abtreibende Riemenscheibe 43 in Pfeilrichtung 21b gedreht wird. Dadurch wird - wie Fig.2 zeigt - die Abtriebswelle 19 in die andere Drehrichtung bewegt, wodurch die Arbeitswelle in Pfeilrichtung 4f gedreht wird.

Der erste Riementrieb 20 ist somit dafür vorgesehen, die Arbeitswelle 4 in einer ersten Drehrichtung 4e zu drehen, während der zweite Riementrieb 40 dafür vorgesehen ist, die Arbeitswelle 4 in Gegendrehrichtung 4f zu drehen. Der Benutzer hat somit die Möglichkeit, durch Bewegung des Stellhebels 29a entweder die eine Stellvorrichtung 27 oder durch Bewegung des Stellhebels 29b die andere Stellvorrichtung 47 zu betätigen, um die Arbeitswerkzeuge 5 entweder in der einen Drehrichtung 4e oder in der anderen Drehrichtung 4f anzutreiben. Entsprechend ist in Fig. 4 der erste Riementrieb 20 in eingekuppelter Stellung gezeigt, während der zweite Riementrieb 40 in ausgekuppelter Stellung gezeigt ist. In Fig. 5 ist der erste Riementrieb 20 in ausgekuppelter Stellung gezeigt, während der zweite Riementrieb 40 in eingekuppelter Stellung gezeigt ist. In der eingekuppelten Stellung ist die Riemenführung 46 in Pfeilrichtung 53 um die gehäusefeste Lagerachse 36 verschwenkt, wobei zur Begrenzung der Riemenspannung im Gehäuse ein Anschlag 54 für die Riemenführung 46 vorgesehen sein kann.

Im gezeigten Ausführungsbeispiel ist die erste Antriebsscheibe 23 des ersten Riementriebes größer als die zweite Antriebsscheibe 42 des zweiten Riementriebes 40 ausgebildet. Entsprechend ist die erste abtreibende Riemenscheibe 21 des ersten Riementriebs 20 kleiner ausgebildet als die zweite abtreibende Riemenscheibe 43 des zweiten Riementriebes 40.

Es kann zweckmäßig sein, die auf einer Welle angeordneten Riemenscheiben ein- oder mehrrillig auszubilden und entsprechend einen ein- oder mehrrilligen Antriebsriemen zu verwenden. Vorteilhaft können die auf einer Welle angeordneten Riemenscheiben als einteilige Riemenscheiben ausgebildet sein, wobei eine erste Riemennut für den Antriebsriemen 22 des ersten Riementriebs 20 und eine zweite Riemennut für den Antriebsriemen 41 des zweiten Riementriebes 40 vorgesehen sein kann. Eine entsprechende Ausbildung wie für die abtreibenden Riemenscheiben 21 und 43 kann auch für die beiden antreibenden Riemenscheiben 23 und 42 vorgesehen sein.

## Patentansprüche

1. Motorhacke zur Bearbeitung eines Bodens, mit einer zur Bodenfläche (3) des Bodens (2) etwa horizontal liegenden Arbeitswelle (4), die mindestens ein Hackwerkzeug (5) trägt, mit einem auf einem Rahmen (10) der Motorhacke (1) befestigten Antriebsmotor (7), dessen Antriebswelle (33) über eine schaltbare Kupplung (20, 40) mit einer Abtriebswelle (19) verbindbar ist, deren anderes Ende die Arbeitswelle (4) antreibt, wobei die schaltbare Kupplung ein Riementrieb (20) ist, dessen Antriebsriemen (22) mit einer Riemenseite über eine antreibende Riemenscheibe (23) der Antriebswelle (33) und mit der gleichen Riemenseite über eine abtreibende Riemenscheibe (21) der Abtriebswelle (19) läuft, sowie mit einer Spannvorrichtung (24) zum kraftübertragenden Anlegen des Riemens (22) an die Riemenscheiben (21, 23), wobei die Antriebswelle (33) eine zweite Riemenscheibe (42) trägt, die mit einem zweiten Antriebsriemen (41) eines weiteren Riementriebs (40) zusammenwirkt, wobei der zweite Antriebsriemen (41) eine endlose, innere Riemenseite (51) und eine endlose, äußere Riemenseite (52) aufweist, und der zweite Antriebsriemen (41) über eine zweite, abtreibende Riemenscheibe (43) sowie eine dritte, umlenkende Riemenscheibe (44) läuft, wobei der zweite Antriebsriemen (41) mit einer ersten Riemenseite (51) auf ersten zugeordneten Riemenscheiben (43, 44) und mit der zweiten Riemenseite (52) über die zweite, zugeordnete Riemenscheibe (42) läuft, derart, dass der erste Riementrieb (20) einen Antrieb der Arbeitswelle (4) in eine erste Drehrichtung (4e) und der zweite Riementrieb (40) einen Antrieb der Arbeitswelle (4) entgegen Drehrichtung (4f) bewirkt,
**dadurch gekennzeichnet, dass** die dritte, umlenkende Riemenscheibe (44) über eine exzentrische Nabe (45) an der gehäusefesten Lagerachse (36) gehalten ist und die Riemenscheibe (44) auf der Nabe (45) drehbar gehalten ist.

2. Motorhacke nach Anspruch 1,
**dadurch gekennzeichnet, dass** sich die zweite, abtreibende Riemenscheibe (43) und die dritte, umlenkende Riemenscheibe (44) bezogen auf die Drehachse (34) der Antriebswelle (33) das Antriebsmotors (7) einander etwa diametral gegenüberliegen.

3. Motorhacke nach Anspruch 1 oder 2,
**dadurch gekennzeichnet, dass** die Lagerachsen (34, 35, 36) der Riemenscheiben gehäusefest ausgebildet sind und etwa auf einer gemeinsamen Geraden liegen.

4. Motorhacke nach einem der Ansprüche 1 bis 3,
**dadurch gekennzeichnet, dass** zum Spannen des zweiten Riementriebs (40) die dritte, umlenkende Riemenscheibe (44) exzentrisch um eine gehäusefeste Lagerachse (36) von einer ausgekuppelten Stellung des Riementriebs (40) in eine eingekuppelte Stellung des Riementriebs (40) verschwenkbar ist.

5. Motorhacke nach einem der Ansprüche 1 bis 4,
**dadurch gekennzeichnet, dass** der Antriebsriemen (22, 41) ein mehrrilliger Keilriemen ist.

6. Motorhacke nach einem der Ansprüche 1 bis 5,
**dadurch gekennzeichnet, dass** die Nabe (45) mit einer Riemenführung (46) verbunden ist, die sich über etwa 180° Umfangswinkel der umlenkenden Riemenscheibe (44) erstreckt.

7. Motorhacke nach Anspruch 6,
**dadurch gekennzeichnet, dass** eine Stellvorrichtung (47) zum Verschwenken der umlenkenden Riemenscheibe (44) an der Riemenführung (46) angreift.

8. Motorhacke nach einem der Ansprüche 1 bis 7,
**dadurch gekennzeichnet, dass** die abtreibende Riemenscheibe (21) des ersten Riementriebs (20) und die zweite abtreibende Riemenscheibe (43) des weiteren Riementriebs (40) als Riemenscheibe mit mindestens zwei Riemennuten ausgebildet sind.

9. Motorhacke nach einem der Ansprüche 1 bis 8,
**dadurch gekennzeichnet, dass** die antreibende Riemenscheibe (23) des ersten Riementriebs (20) und die zweite antreibende Riemenscheibe (42) des weiteren Riementriebs (40) als Riemenscheibe mit mindestens zwei Riemennuten ausgebildet sind.

10. Motorhacke nach Anspruch 8 oder 9,
**dadurch gekennzeichnet, dass** die Riemenscheibe (21, 23, 42, 43) einteilig ausgebildet ist.

## Claims

1. Motorised hoe for ground preparation, with a working shaft (4) that extends approximately horizontally relative to the surface (3) of the ground (2) and carries at least one hoeing tool (5), with a drive motor (7) fixed onto a frame (10) of the motorised hoe (1), whose driveshaft (33) can be connected via a shiftable clutch (20, 40) to a drive output shaft (19) the other end of which drives the working shaft (4), such that the said shiftable clutch is a belt drive (20) whose drive belt (22) runs with one belt side over a driving belt pulley (23) of the driveshaft (33) and with the same side of the belt over a drive output pulley (21) of the drive output shaft (19), and with a tensioning device (24) for bringing the belt (22) into force-transmitting contact with the belt pulleys (21, 23), such that the driveshaft (33) carries a second belt pulley (42) which co-operates with a second drive belt (41) of a further belt drive (40), such that the second drive belt (41) has an endless inner belt side (51) and an endless outer belt side (52) and the second drive belt (41) runs over a second drive output belt pulley (43) and a third, deflecting belt pulley (44), such that the second drive belt (41) runs with a first belt side (51) against the first associated belt pulleys (43, 44) and with the second belt side (52) against the second associated belt pulley (42), in such manner that the first belt drive (20) drives the working shaft (4) in a first rotation direction (4e) and the second belt drive drives the working shaft (4) in the opposite rotation direction (4f),
**characterised in that** the third, deflecting belt pulley (44) is mounted by means of an eccentric hub (45) on a bearing axle (36) fixed on the housing and the belt pulley (44) is held and able to rotate on the said hub (45).

2. Motorised hoe according to Claim 1,
**characterised in that** the second, drive output belt pulley (43) and the third, deflecting belt pulley (44) are approximately diametrically opposite one another in relation to the rotation axis (34) of the driveshaft (33) of the drive motor (7).

3. Motorised hoe according to Claims 1 or 2,
**characterised in that** the bearing axles (34, 35, 36) of the belt pulleys are fixed on the housing and lie approximately in a common line.

4. Motorised hoe according to any of Claims 1 to 3,
**characterised in that** to tension the second belt drive (40), the third, deflecting belt pulley (44) can be pivoted eccentrically about a bearing axle (36) fixed on the housing, from a position in which the belt drive (40) is not engaged, to a position in which the belt drive (40) is engaged.

5. Motorised hoe according to any of Claims 1 to 4,
**characterised in that** the drive belt (22, 41) is a multi-grooved V-belt.

6. Motorised hoe according to any of Claims 1 to 5,
**characterised in that** the hub (45) is connected to a belt guide (46), which extends over a circumferential angle of approximately 180° of the belt pulley (44).

7. Motorised hoe according to Claim 6,
**characterised in that** to pivot the deflecting belt pulley (44), a control device (47) engages on the belt guide (46).

8. Motorised hoe according to any of Claims 1 to 7,
**characterised in that** the drive output belt pulley (21) of the first belt drive (20) and the second drive output belt pulley (43), that of the further belt drive (40), are in the form of belt pulleys with at least two belt grooves.

9. Motorised hoe according to any of Claims 1 to 8,
**characterised in that** the drive input belt pulley (23) of the first belt drive (20) and the second drive input belt pulley (42), that of the further belt drive (40), are in the form of belt pulleys with at least two belt grooves.

10. Motorised hoe according to Claims 8 or 9,
**characterised in that** the belt pulleys (21, 23, 42, 43) are formed integrally.

## Revendications

1. Motobineuse pour traiter une terre, avec un arbre de travail (4) qui est à peu près horizontal par rapport à la surface (3) de la terre (2) et qui porte au moins un outil de binage (5), avec un moteur d'entraînement (7) qui est fixé à un châssis (10) de la motobineuse (1) et dont l'arbre d'entraînement (33) est apte à être relié par l'intermédiaire d'un accouplement débrayable (20, 40) à un arbre de sortie (19) dont l'autre extrémité entraîne l'arbre de travail (4), étant précisé que l'accouplement débrayable est constitué par une commande à courroie (20) dont la courroie d'entraînement (22) passe avec un côté sur une poulie d'entraînement (23) de l'arbre d'entraînement (33), et avec le même côté sur une poulie de sortie (21) de l'arbre de sortie (19), et avec un dispositif de tension (24) pour appliquer avec une transmission de force la courroie (22) contre les poulies (21, 23), étant précisé que l'arbre d'entraînement (33) porte une deuxième poulie (42) qui coopère avec une deuxième courroie d'entraînement (41) d'une autre commande à courroie (40), étant précisé que la deuxième courroie d'entraînement (41) comporte un côté de courroie intérieur sans fin (51) et un côté de courroie extérieur sans fin (52), et que ladite deuxième courroie d'entraînement (41) passe sur une deuxième poulie, la poulie de sortie (43) et sur une troisième poulie, la poulie de renvoi (44), et étant précisé que la deuxième courroie d'entraînement (41) passe avec un premier côté de courroie (51) sur des premières poulies associées (43, 44) et avec le deuxième côté de courroie (52) sur la deuxième poulie associée (42), de sorte que la première commande à courroie (20) provoque un entraînement de l'arbre de travail (4) dans un premier sens de rotation (4e) tandis que la deuxième commande à courroie (40) provoque un entraînement de l'arbre de travail (4) dans le sens de rotation inverse (4f),
**caractérisée en ce que** la troisième poulie, la poulie de renvoi (44), est fixée par l'intermédiaire d'un moyeu excentrique (45) à l'axe de montage (36) solidaire du carter, et la poulie (44) est fixée en rotation sur le moyeu (45).

2. Motobineuse selon la revendication 1,
**caractérisée en ce que** la deuxième poulie, la poulie de sortie (43), et la troisième poulie, la poulie de renvoi (44), sont à peu près diamétralement opposées par rapport à l'axe de rotation (34) de l'arbre d'entraînement (33) du moteur d'entraînement (7).

3. Motobineuse selon la revendication 1 ou 2,
**caractérisée en ce que** les axes de montage (34, 35, 36) des poulies de courroie sont solidaires du carter et sont situés à peu près sur une droite commune.

4. Motobineuse selon l'une des revendications 1 à 3,
**caractérisée en ce que** pour tendre la deuxième commande à courroie (40), la troisième poulie, la poulie de renvoi (44), est apte à pivoter sur un axe de montage (36) solidaire du carter pour passer d'une position débrayée de la commande à courroie (40) à une position embrayée de ladite commande à courroie (40).

5. Motobineuse selon l'une des revendications 1 à 4,
**caractérisée en ce que** la courroie d'entraînement (22, 41) est constituée par une courroie trapézoïdale à plusieurs rainures.

6. Motobineuse selon l'une des revendications 1 à 5,
**caractérisée en ce que** le moyeu (45) est relié à un guide de courroie (46) qui s'étend sur un angle périphérique d'environ 180° de la poulie de renvoi (44).

7. Motobineuse selon la revendication 6,
**caractérisée en ce qu'**un dispositif de réglage (47) destiné à faire pivoter la poulie de renvoi (44) agit sur le guide de courroie (46).

8. Motobineuse selon l'une des revendications 1 à 7,
**caractérisée en ce que** la poulie de sortie (21) de la première commande à courroie (20) et la deuxième poulie, la poulie de sortie (43) de l'autre commande à courroie (40) sont conçues comme des poulies avec au moins deux rainures pour courroie.

9. Motobineuse selon l'une des revendications 1 à 8,
**caractérisée en ce que** la courroie d'entraînement (23) de la première commande à courroie (20) et la deuxième poulie d'entraînement (42) de l'autre commande à courroie (40) sont conçues comme des poulies avec au moins deux rainures pour courroie.

10. Motobineuse selon la revendication 8 ou 9,
**caractérisée en ce que** la poulie (21, 23, 42, 43) est conçue d'une seule pièce.
